# EUROPÄISCHE PATENTSCHRIFT

(11) **EP 1 537 295 B1**
(45) Veröffentlichungstag und Bekanntmachung des Hinweises auf die Patenterteilung: **03.05.2006**
(21) Anmeldenummer: 03797229.6
(22) Anmeldetag: 07.08.2003
(51) Int. Cl.: F01C 21/08, B62D 6/02, B62D 5/06

(54) **HYDRAULISCHES SERVOLENKSYSTEM F R KRAFTFAHRZEUGE**
HYDRAULIC POWER-ASSISTED STEERING SYSTEM FOR MOTOR VEHICLES
SYSTEME DE DIRECTION ASSISTEE HYDRAULIQUE POUR VEHICULES AUTOMOBILES

(30) Priorität: 23.08.2002 DE 10238821
(43) Veröffentlichungstag der Anmeldung: 08.06.2005
(73) Patentinhaber: ZF Lenksysteme GmbH, 73527 Schwäbisch Gmünd (DE)
(72) Erfinder: SCHMID, Johannes, 73527 Schwäbisch Gmünd (DE)
(86) Internationale Anmeldenummer: PCT/EP2003/008755
(87) Internationale Veröffentlichungsnummer: WO 2004/027216

(56) Entgegenhaltungen:
- DE-A- 2 512 433
- DE-A- 19 529 807

## Beschreibung

Die Erfindung betrifft ein hydraulisches Servolenksystem für Kraftfahrzeuge gemäß dem Oberbegriff des Anspruches 1.

Servolenksysteme der vorgenannten Art sind aus der DE 42 20 624 A1 bekannt und bei diesen ist im Übergang von der Hochdruckpumpe auf das Lenkventil ein Stromventil vorgesehen, das zur Veränderung der Servowirkung über der Fahrzeuggeschwindigkeit in seinem Öffnungsquerschnitt über ein entsprechend angesteuertes, elektromagnetisches Stellglied veränderbar ist.

Aus der DE 195 29 807 A1 ist des Weiteren eine Flügelzellenpumpe bekannt, der druckseitig ein 3-Wege-Stromregelventil nachgeordnet ist, durch das die Förderung auf den Verbraucher erst freigegeben wird, wenn ein gewisser Mindestdruck ansteht. Hierdurch soll das Kaltstartverhalten der Flügelzellenpumpe verbessert werden. Hierbei wird davon ausgegangen, dass unter Kaltstartbedingungen durch mangelnde radiale Druckbelastung der Flügel keine ausreichende Abgrenzung der Arbeitskammern gegeneinander gegeben ist und somit Kurzschlusseffekte eintreten. Damit sinkt die Förderleistung, und der Nachteil der verringerten Förderleistung und des dadurch verzögerten Druckaufbaus soll dadurch ausgeglichen werden, dass über das Stromregelventil der druckseitige Abflussweg abgesperrt wird. Das diesbezüglich ausgestaltete Stromregelventil ist konstruktiv aufwendig.

Aus der DE-A-2512433 ist ein Servolenlisystem mit einem passiven Stromventil bekannt.

Der Erfindung liegt die Aufgabe zugrunde, ein hydraulisches Servolenksystem der eingangs genannten Art dahingehend auszubilden, dass dieses den gewachsenen Komfortanforderungen genügt, und zwar bei geringem Energieeinsatz und ohne erhöhten konstruktiven Aufwand.

Erreicht wird dies gemäß der Erfindung mit den Merkmalen des Anspruches 1, wobei als Konstant-Hochdruckpumpe eine Flügelzellenpumpe eingesetzt wird, die sich durch geringe Pulsation und günstiges Geräuschverhalten auszeichnet. Nachgeschaltet zur Flügelzellenpumpe ist ein über ein elektromagnetisches Stellglied beaufschlagbares Stromventil vorgesehen, das in Verbindung mit einem zwischengeschalteten Druckbegrenzungsventil in einfacher Weise eine Anpassung an der Fördermenge an den in Abhängigkeit von Fahrbedingungen und Fahrverhalten zur Servounterstützung erforderlichen Bedarf ermöglicht, wobei erfindungsgemäß das Stromventil über das elektromagnetische Stellglied im Kaltstartbetrieb zusätzlich so angesteuert werden kann, dass ein möglichst schneller Druckaufbau in der Flügelzellenpumpe stattfindet. Die Erfindung kombiniert also in vorteilhafter Weise die Nutzung des Stromventiles zur Minimierung des Energieverbrauches und für einen verbesserten Kaltstartbetrieb, mit entsprechender Verschleißreduktion, wobei diese Kombination keinen konstruktiven Aufwand bedingt und im Wesentlichen auf die Nutzung von für den Fahrzeugbetrieb ohnehin erfassten Daten zurückgreift, bei entsprechender Verknüpfung auf Softwarebasis.

In besonders einfacher Weise kann das Stromventil bei der erfindungsgemäßen Lösung als Drosselventil ausgebildet sein, wobei bevorzugt die Schließrichtung des Drosselventiles der Durchflussrichtung entspricht. Bei entsprechender Federbelastung in Schließrichtung kann dementsprechend mit schwachen Federn gearbeitet werden, und es sind ungeachtet dessen die elektromagnetisch aufzubringenden Stellkräfte klein zu halten, wenn das Drosselventil in weiterer erfindungsgemäßer Ausgestaltung druckentlastet ausgebildet ist.

In erfindungsgemäßer Weise erfolgt die Ansteuerung des elektromagnetischen Stellgliedes zur Berücksichtigung des Kaltstartbetriebes unter Kaltstartbedingungen eingrenzenden Parametern, die im Rahmen des Fahrzeugbetriebes einschließlich des Brennkraftmaschinenbetriebes üblicherweise erfasst und auch einzeln sowie untereinander verknüpft abrufbar sind, wobei als Kaltstartparameter insbesondere die Motortemperatur, die Außentemperatur, die Motordrehzahl, die Stillstandszeit des Motors, aber auch weitere Parameter erfasst werden können.

Weitere Einzelheiten und Merkmale der Erfindung ergeben sich aus den Ansprüchen und ferner wird die Erfindung nachstehend an Hand eines Ausführungsbeispieles erläutert, wobei
- Fig. 1: eine schematisierte Darstellung eines hydraulischen Servolenksystems gemäß der Erfindung zeigt, und
- Fig. 2: einen Schnitt durch ein als Drosselventil ausgebildetes Stromventil, wie es im Rahmen der Erfindung mit Vorteil einzusetzen ist.

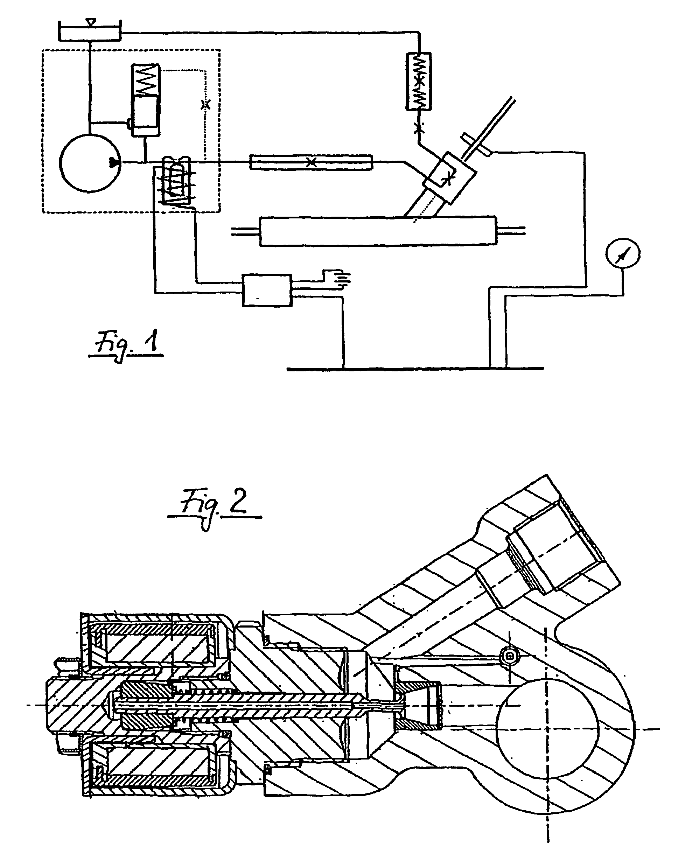

In der Schemadarstellung gemäß Fig. 1 des erfindungsgemäßen hydraulischen Servolenksystemes 1 ist mit 2 die als Konstantpumpe ausgebildete Flügelzellenpumpe bezeichnet, die aus einem Vorratsbehälter 3 gespeist ist und die auf ein Lenkventil 4 fördert, dem, sofern nicht in das Lenkventil 4 integriert, eine Stelleinrichtung für das Lenkgetriebe 5 nachgeordnet ist. Die vom Lenkgetriebe 5 zu den Rädern führenden Verbindungen sind bei 6 angedeutet. Ferner ist die Verbindung des Lenkventiles 4 zum nicht dargestellten Lenkrad über eine schematisch dargestellte Lenkwelle 7 veranschaulicht.

In der Verbindung der Flügelzellenpumpe 2 zum Lenkventil 4 liegt als Druckspeicher und/oder Pulsationen dämpfendes Element ein Dehnschlauch 8, und es ist ferner der Flügelzellenpumpe 2 benachbart angeordnet ein Stromventil 9 vorgesehen, dem ein elektromagnetisches Stellglied 10, wie in Fig. 2 des Näheren veranschaulicht, zugeordnet ist.

Im Übergang zwischen Flügelzellenpumpe 2 und Stromventil 9 liegt eine Abzweigung 11 auf ein Druckbegrenzungsventil 12, das mit der Saugleitung 13 der Pumpe 2 über einen Leitungsabschnitt 14 verbunden ist. Das Druckbegrenzungsventil 12 ist druckgesteuert, und zwar in Abhängigkeit von dem in der Leitungsverbindung 15 zwischen Stromventil 9 und Lenkventil 4 gegebenen Druck, wie durch die Strichpunktlinie 16 veranschaulicht. Der Rücklauf vom Lenkventil 4 auf den Vorratsbehälter 3 erfolgt über eine Leitung 17, in der ein Kühler 18 angeordnet ist.

Schematisch ist des Weiteren angedeutet ein Lenkgeschwindigkeitssensor 38, über den die Drehgeschwindigkeit der Lenkwelle 7 abgegriffen wird, sowie ein Geschwindigkeitssensor 19, über den die Fahrgeschwindigkeit des Fahrzeuges erfasst wird und der beispielsweise durch das Tachometer des Fahrzeuges gebildet sein kann. Die jeweils erfassten Signale werden in einer Steuereinheit 20 verarbeitet, wobei die Verbindung, wie schematisiert angedeutet, über einen so genannten CAN-Bus 21 hergestellt wird. Über die Steuereinheit 20 werden bevorzugt weitere Steuerparameter, die den Kaltstartbetrieb der Flügelzellenpumpe 2 kennzeichnen, verarbeitet, und die im Regelfall in Verbindung mit anderen Fahrzeugfunktionen ohnehin erfasst sind.

Von der Steuereinheit 20 wird die Bestromung des Stellgliedes 10 gesteuert, wobei als Stromquelle 22 beispielsweise die Batterie oder ein sonstiger Netzanschluss im Fahrzeug vorgesehen ist, und wobei von der Steuereinheit 20 zum Stellglied die Leitungsanschlüsse 23 führen.

In der Darstellung gemäß Fig. 2 ist ein Ventilgehäuse 24 vorgesehen, bei dem der pumpenseitige Zulaufanschluss mit 25 und der zum Lenkventil 4 führende Anschluss mit 26 bezeichnet ist.

Im Übergangsbereich zwischen diesen Anschlüssen 25 und 26 liegt der über das Drosselglied 27 des als Drosselventil ausgestalteten Stromventiles 9 gesteuerte Öffnungsquerschnitt 28, in den das Drosselglied 27 mit seinem verbreiterten Drosselkopf 29 eingreift, an den die Führungsstange 30 ansetzt. Die Führungsstange 30 erstreckt sich bis in den Bereich der Wicklung 31 des elektromagnetischen Stellgliedes 10 und weist in diesem Endbereich einen Anker 32 auf. Die Führungsstange 30 ist hohl gebohrt, derart, dass sich gegenüberliegend zum Drosselkopf 29 eine Druckkammer 33 ergibt, mit der Folge eines Druckausgleiches, so dass das Drosselglied 27 bei verhältnismäßig kleinen, über das Stellglied 10 aufzubringenden Stellkräften in Öffnungsrichtung verschoben werden kann, wobei der Drosselkopf 29 in den sich in Öffnungsrichtung erweiternden Öffnungsquerschnitt 28 eintaucht. Mit 34 ist die verhältnismäßig schwache, das Drosselglied 27 in Schließrichtung belastende Feder bezeichnet.

Im Arbeitsbetrieb des Servolenksystems 1 wird durch entsprechende, über die Steuereinheit 20 gesteuerte Bestromung des Stellgliedes 10 der Öffnungsquerschnitt 28 soweit freigegeben, wie dies im Hinblick auf die fahrtechnisch und unter Komfortgesichtspunkten erwünschte Servowirkung und den hierfür erforderlichen Volumenstrom zweckmäßig ist.

Im Hinblick auf die unter Kaltstartbedingungen verringerte Förderleistung der Flügelzellenpumpe 2 erfolgt unter Kaltstartbedingungen die Ansteuerung des als Drosselventil ausgebildeten Stromventiles 9 derart, dass der Öffnungsquerschnitt 28, wie in der Zeichnung veranschaulicht, zumindest im Wesentlichen über den Drosselkopf 29 abgesperrt ist, so dass sich bezüglich der Flügelzellenpumpe 2 zunächst, ohne oder ohne wesentlichen Fördervolumenstrom auf den Verbraucher, hier das Lenkventil 4, ein Druck aufbaut, durch den die Flügel der Flügelzellenpumpe 2 in ihre radial äußere Lage am Kurvenring angelegt werden. Hierdurch werden Kurzschlussverbindungen zwischen den einzelnen Arbeitskammern der Flügelzellenpumpe schnell abgebaut.

Eine derartige, im Wesentlichen allein dem Druckaufbau dienende Arbeitsweise ist lediglich sehr kurzzeitig erforderlich, beeinträchtigt damit das Servolenksystem bezüglich eines unmittelbaren Ansprechens beim Start des Fahrzeuges nicht, und wird ohne konstruktiven Sonderaufwand über die entsprechende Ansteuerung des Stromventiles 9 erreicht, das bei entsprechender Ansteuerung über die Steuereinheit 20 zudem sicherstellt, dass die als Konstantpumpe arbeitende Flügelzellenpumpe 2 lediglich den Anteil des Fördervolumens auf das Lenkventil 4, bzw. eine eventuelle Servostelleinheit fördert, der aus Fahr- und/oder Komfortgründen erforderlich ist.

## Patentansprüche

1. Hydraulisches Servolenksystem für Kraftfahrzeuge mit einem Lenkgetriebe, einem Lenkventil und einer Konstant-Hochdruckpumpe, die eine Verbindung zum Lenkventil aufweist, in der ein Stromventil liegt, das in seinem Öffnungsquerschnitt in Berücksichtigung von das Lenkverhalten beeinflussenden Parametern über ein elektromagnetisches Stellglied einstellbar ist,
**dadurch gekennzeichnet,**
**dass** die Hochdruckpumpe als Flügelzellenpumpe (2) ausgebildet ist, auf die druckseitig das Stromventil (9) bei zwischengeschaltetem Druckbegrenzungsventil (12) folgt und dass der Öffnungsquerschnitt des Stromventiles (9) bei Kaltstartbetrieb der Flügelzellenpumpe (2) zumindest im Wesentlichen geschlossen ist.

2. Hydraulisches Servolenksystem nach Anspruch 1,
**dadurch gekennzeichnet,**
**dass** das Stromventil (9) als Drosselventil ausgebildet ist.

3. Hydraulisches Servolenksystem nach Anspruch 2,
**dadurch gekennzeichnet,**
**dass** die Schließrichtung des Drosselventiles der Durchflussrichtung entspricht.

4. Hydraulisches Servolenksystem nach Anspruch 2 oder 3,
**dadurch gekennzeichnet,**
**dass** das Drosselventil in Schließrichtung federbelastet ist.

5. Hydraulisches Servolenksystem nach einem der Ansprüche 2 bis 4,
**dadurch gekennzeichnet,**
**dass** das Drosselventil druckentlastet ausgebildet ist.

6. Hydraulisches Servolenksystem nach einem der vorhergehenden Ansprüche,
**dadurch gekennzeichnet,**
**dass** das elektromagnetische Stellglied (10) in Berücksichtigung von Kaltstartbedingungen der Flügelzellenpumpe eingrenzenden Parametern ansteuerbar ist.

7. Hydraulisches Servolenksystem nach Anspruch 6,
**dadurch gekennzeichnet,**
**dass** als Kaltstartparameter die Motortemperatur des Fahrzeugmotores, die Außentemperatur, die Drehzahl des Fahrzeugmotors, die Stillstandszeit des Fahrzeugmotores und/oder die Zeit ab Motorstart vorgesehen sind.

## Claims

1. Hydraulic power steering system for motor vehicles having a steering mechanism, a steering valve and a fixed displacement high pressure pump which has a connection to the steering valve in which a flow valve is situated whose opening cross section can be adjusted via an electromagnetic actuator with parameters which influence the steering behaviour being taken into consideration, **characterized in that** the high pressure pump is configured as a vane cell pump (2) followed on the delivery side by the flow valve (9) with a pressure relief valve (12) connected in between, and **in that** the opening cross section of the flow valve (9) is at least substantially closed during cold start operation of the vane cell pump (2).

2. Hydraulic power steering system according to Claim 1, **characterized in that** the flow valve (9) is configured as a throttling valve.

3. Hydraulic power steering system according to Claim 2, **characterized in that** the closing direction of the throttling valve corresponds to the direction of throughflow.

4. Hydraulic power steering system according to Claim 2 or 3, **characterized in that** the throttling valve is spring-loaded in the closing direction.

5. Hydraulic power steering system according to one of Claims 2 to 4, **characterized in that** the throttling valve is configured to be relieved of pressure.

6. Hydraulic power steering system according to one of the preceding claims, **characterized in that** it is possible to actuate the electromagnetic actuator (10) with parameters which limit cold start conditions of the vane cell pump being taken into consideration.

7. Hydraulic power steering system according to Claim 6, **characterized in that** the engine temperature of the vehicle engine, the outside temperature, the rotational speed of the vehicle engine, the standstill time of the vehicle engine and/or the time from engine starting are provided as cold start parameters.

## Revendications

1. Système de direction assistée hydraulique pour véhicules automobiles comprenant un mécanisme de direction, une vanne de direction et une pompe haute pression à cylindrée constante, laquelle présente une liaison vers la vanne de direction, dans laquelle se trouve un régulateur de débit dont la section d'ouverture est réglable par le biais d'un élément de commande électromagnétique en fonction des paramètres qui influencent le comportement de la direction, **caractérisé en ce que** la pompe haute pression est réalisée sous la forme d'une pompe à palettes (2) du côté refoulement de laquelle est raccordé le régulateur de débit (9) avec interposition d'une soupape de limitation de la pression (12) et que la section d'ouverture du régulateur de débit (9) est au moins pour l'essentiel fermée lorsque la pompe à palettes (2) est en mode de démarrage à froid.

2. Système de direction assistée hydraulique selon la revendication 1, **caractérisé en ce que** le régulateur de débit (9) est réalisé sous la forme d'une vanne d'étranglement.

3. Système de direction assistée hydraulique selon la revendication 2, **caractérisé en ce que** le sens de fermeture de la vanne d'étranglement correspond au sens de l'écoulement.

4. Système de direction assistée hydraulique selon la revendication 2 ou 3, **caractérisé en ce que** la vanne d'étranglement est soumise à la contrainte d'un ressort dans le sens de la fermeture.

5. Système de direction assistée hydraulique selon l'une des revendications 2 à 4, **caractérisé en ce que** la vanne d'étranglement est de configuration détendue.

6. Système de direction assistée hydraulique selon l'une des revendications précédentes, **caractérisé en ce que** l'élément de commande électromagnétique (10) peut être commandé en tenant compte des paramètres limitant les conditions de démarrage à froid de la pompe à palettes.

7. Système de direction assistée hydraulique selon la revendication 6, **caractérisé en ce que** les paramètres de démarrage à froid prévus sont la température du moteur du véhicule, la température extérieure, le régime du moteur du véhicule, le temps d'arrêt du moteur du véhicule et/ou la durée depuis le démarrage du moteur.
